# EUROPÄISCHE PATENTANMELDUNG

(11) **EP 3 936 465 A1**
(43) Veröffentlichungstag der Anmeldung: **12.01.2022**
(21) Anmeldenummer: 21172685.6
(22) Anmeldetag: 07.05.2021
(51) Int. Cl.: B65G 47/244, B65G 47/86, B65B 25/00, B65B 35/58, B65G 54/02, B65B 35/16

(54) **VERFAHREN ZUM FÖRDERN UND GGF. VERPACKEN VON KLEINSTÜCKIGEN ARTIKELN MIT ARTIKELÜBERGABE IN EINER FÖRDEREINRICHTUNG MIT UMLAUFENDER BEWEGUNGSBAHN**

(30) Priorität: 09.07.2020 DE 102020208622
(71) Anmelder: Theegarten-Pactec GmbH & Co. KG, 01237 Dresden (DE)
(72) Erfinder: Bergmann, Matthias, 01728 Bannewitz (DE); Seibt, Wilfried, 01640 Coswig (DE); Wehner, Gert, 01328 Dresden (DE)
(74) Vertreter: Grünecker Patent- und Rechtsanwälte PartG mbB

(57) **Zusammenfassung**

Verfahren und Fördereinrichtung zum Fördern und ggf. Verpacken von kleinstückigen Artikeln, insbesondere von Lebensmitteln oder Verbrauchsgütern, wie Süßwaren, Brühwürfeln oder Waschtabs, wobei die Fördereinrichtung (1) wenigstens zwei entlang einer umlaufenen Bewegungsbahn (B) bewegbare Halteorgane (2, 3) zum Halten und Fördern der Artikel (A) aufweist, wobei jeder Artikel (A) vorzugsweise während seiner Förderung entlang der Bewegungsbahn (B) von einem ersten dieser Halteorgane (2) an ein zweites dieser Halteorgane (3) übergeben so dass die Änderung der Artikelorientierung in besonders kompakter Bauweise ermöglicht wird

## Beschreibung

Die vorliegende Erfindung betrifft ein Verfahren zum Fördern und ggf. Verpacken von kleinstückigen Artikeln, insbesondere von Lebensmitteln oder Verbrauchsgütern, wie Süßwaren, Brühwürfeln oder Waschtabs, in einer Fördereinrichtung mit umlaufender Bewegungsbahn, wobei eine Artikelorientierung durch Artikelübergabe innerhalb der Fördereinrichtung geändert werden kann.

Die Förderung und ggf. Verpackung von kleinstückigen Produkten erfolgt in modernen Maschinen in kontinuierlich rotierenden Arbeitsköpfen mit umlaufender, kreisförmiger Bewegungsbahn, sogenannten Rotationsköpfen. Bei der Übergabe von Artikeln von einem Rotationskopf in den nächsten und insbesondere bei der Ausführung von Faltvorgängen eines dem Artikel zugeordneten Packmittels sind die Orientierung der Artikel und die Anordnung der den Artikel haltenden Halteorgane wichtig. Verfahren und Vorrichtungen zum Fördern und Verpacken von kleinstückigen Artikeln mit mehreren zusammenwirkenden Rotationsköpfen sind u.a. aus der EP 2 906 473 der Anmelderin bekannt.

Daneben sind auch umlaufende Transportvorrichtungen bekannt, z.B. aus der aus der EP 3 038 959, wobei mehrere Transporteinheiten auf einer umlaufenden Bewegungsbahn bzw. Führungsschiene frei beweglich gelagert sind.

Der vorliegenden Erfindung liegt die Aufgabe zugrunde, die bekannten Verfahren und Vorrichtungen zu verbessern, um die Änderung der Artikelorientierung in besonders kompakter Bauweise zu ermöglichen.

Zur Lösung der Aufgabe stellt die Erfindung das Verfahren nach Anspruch 1 und die Fördereinrichtung nach Anspruch 7 bereit.

Das erfindungsgemäßen Verfahren dient zum Fördern und ggf. Verpacken von kleinstückigen Artikeln, insbesondere von Lebensmitteln oder Verbrauchsgütern, wie Süßwaren, Brühwürfeln oder Waschtabs, mit einer Fördereinrichtung, die wenigstens zwei entlang einer umlaufenen Bewegungsbahn bewegbare Halteorgane zum Halten und Fördern der Artikel aufweist, wobei jeder Artikel vorzugsweise während seiner Förderung entlang der Bewegungsbahn von einem ersten dieser Halteorgane an ein zweites dieser Halteorgane übergeben wird.

Mit dem erfindungsgemäßen Verfahren lassen sich neue Einschlagarten in besonders kompakter Bauweise realisieren. Als Beispiel sei die Realisierung des flachen Anstapelns genannt. Dabei werden z.B. verpackte quaderförmige Artikel i.d.R. liegend über die Höhe gestapelt, d. h. die Artikel werden in Förderrichtung gestaut, wobei die Hochachse jedes Artikels bzw. dritte Artikelachse entlang der Förderrichtung ausgerichtet ist.

Das Verfahren kann kontinuierlich oder diskontinuierlich ausgeführt werden. Im kontinuierlichen Verfahren bewegt sich der Artikel kontinuierlich. In einer als Rotationskopf ausgebildeten Fördereinrichtung werden die Halteorgane kontinuierlich auf einer kreisförmigen Bewegungsbahn bewegt, während der Rotationskopf kontinuierlich um seine Rotationsachse rotiert. Dabei werden vorzugsweise die Artikel dem Rotationskopf nacheinander in Reihe auf wenigstens einer Artikelbahn (ggf. mehreren, insbesondere parallelen Artikelbahnen) zugeführt, dann während der kontinuierlichen Rotation des Rotationskopfs vom ersten Halteorgan aufgenommen, sodann an das zweite Halteorgan übergeben, und anschließend vom zweiten Halteorgan (z.B. an eine nachgelagerte Einrichtung) abgegeben. Es ist aber auch möglich, dass die Fördereinrichtung als intelligentes bzw. umlaufendes Transportsystem ausgebildet ist. Das erste Halteorgan nimmt den Artikel dabei an einer Aufnahmestation auf und übergibt den Artikel an das zweite Halteorgan, vorzugsweise während sich das erste und/oder das zweite Halteorgan entlang der Bewegungsbahn bewegt. Das zweite Halteorgan gibt den Artikel dann an einer Abgabestation wieder ab. In jedem der beiden Halteorgane wird der Artikel vorzugsweise über wenigstens einen - bevorzugt - linearen oder kreisabschnittsförmigen Teil der umlaufenden Bewegungsbahn der Halteorgane gefördert.

Es kann sinnvoll sein, wenn das zweite Halteorgan den Artikel in anderer Orientierung hält als das erste Halteorgan, vorzugsweise über eine andere Artikelachse. Dadurch kann die Artikelorientierung bei der Übergabe des Artikels besonders einfach geändert werden.

Es kann sich als nützlich erweisen, wenn der Artikel mit dem ersten Halteorgan um eine vom Zentrum der Bewegungsbahn beabstandete Drehachse, vorzugsweise um eine senkrecht zu einer Ebene der Bewegungsbahn und/oder senkrecht zur Bewegungsrichtung des ersten Halteorgans ausgerichtete Drehachse gedreht wird, bevorzugt in Richtung des zweiten Halteorgans, besonders bevorzugt um einen Winkel von 45°, ganz besonders bevorzugt entgegen der Bewegungsrichtung des ersten Halteorgans. Dadurch kann die Artikelorientierung besonders einfach bei der Übergabe des Artikels um 90° geändert werden. Gerade bei quaderförmigen oder würfelförmigen Artikel erleichtert diese Ausführung den Verpackungsvorgang erheblich.

Es kann praktisch sein, wenn die ersten und zweiten Halteorgane vor und/oder nach Übergabe des Artikels relativ zueinander bewegt werden, vorzugsweise relativ zueinander gedreht werden, bevorzugt in unterschiedliche Richtungen, besonders bevorzugt in entgegengesetzte Richtungen.

Es kann sich als hilfreich erweisen, wenn die Artikel dem ersten Halteorgan auf wenigstens einer Artikelbahn nacheinander in Reihe zugeführt werden und/oder von dem zweiten Halteorgan auf wenigstens einer Artikelbahn nacheinander in Reihe abgeführt werden. Wenn beide Halteorgane eigene Bewegungen ausführen, kann die Artikelübergabe beschleunigt werden.

Es kann zweckdienlich sein, wenn die ersten und zweiten Halteorgane kontinuierlich entlang der Bewegungsbahn bewegt werden, vorzugsweise in der gleichen Bewegungsrichtung. Diese Ausführung begünstigt die Förderung größer Stückzahlen nach dem erfindungsgemäßen Verfahren.

Ein weiterer Aspekt der Erfindung betrifft eine Fördereinrichtung zum Fördern und ggf. Verpacken von kleinstückigen Artikeln, insbesondere von Lebensmitteln oder Verbrauchsgütern, wie Süßwaren, Brühwürfeln oder Waschtabs, vorzugsweise nach dem Verfahren gemäß einer der vorangehenden Ausführungen, wobei die Fördereinrichtung wenigstens zwei entlang einer umlaufenden Bewegungsbahn bewegbare Halteorgane zum Halten und Fördern der Artikel aufweist, wobei die Fördereinrichtung ausgebildet ist, um jeden Artikel vorzugsweise während seiner Förderung entlang der Bewegungsbahn von einem ersten dieser Halteorgane an ein zweites dieser Halteorgane zu übergeben.

Es kann von Vorteil sein, wenn das erste Halteorgan von einer Aufnahmestellung, in welcher das erste Halteorgan den Artikel aufnimmt, in eine Übergabestellung, in welcher das erste Halteorgan den Artikel an das zweite Halteorgan übergibt, reversibel überführbar ist, vorzugsweise durch Drehung um eine vom Zentrum der Bewegungsbahn beabstandete Drehachse, bevorzugt durch Drehung um eine senkrecht zu einer Ebene der Bewegungsbahn und/oder senkrecht zur Bewegungsrichtung des ersten Halteorgans ausgerichtete Drehachse, besonders bevorzugt in Richtung des zweiten Halteorgans, ganz besonders bevorzugt um einen Winkel von 45°, noch weiter bevorzugt entgegen der Bewegungsrichtung des ersten Halteorgans.

Es kann nützlich sein, wenn das zweite Halteorgan von einer Übernahmestellung, in welcher das zweite Halteorgan den Artikel vom erstem Halteorgan übernimmt, in eine Abgabestellung, in welcher das zweite Halteorgan den Artikel abgibt, reversibel überführbar ist, vorzugsweise durch Drehung um eine vom Zentrum der Bewegungsbahn beabstandete Drehachse, bevorzugt durch Drehung um eine senkrecht zu einer Ebene der Bewegungsbahn und/oder senkrecht zur Bewegungsrichtung des ersten Halteorgans ausgerichtete Drehachse, besonders bevorzugt in einer vom ersten Halteorgan abweisenden Richtung, ganz besonders bevorzugt um einen Winkel von 45°, noch weiter bevorzugt entgegen der Bewegungsrichtung des zweiten Halteorgans.

Es kann sich als praktisch erweisen, wenn die Fördereinrichtung eine Mehrzahl von Arbeitsstationen mit jeweils einem ersten Halteorgan und einem zweiten Halteorgan aufweist, wobei vorzugsweise die Arbeitsstationen derart konfiguriert sind, dass ein Artikel jeweils von einem ersten Halteorgan einer der Arbeitsstationen an ein zweites Halteorgan einer anderen der Arbeitsstationen übergeben wird, wobei bevorzugt das erste und das zweite Halteorgan derselben Arbeitsstation um eine gemeinsame Drehachse drehbar sind.

Es kann sinnvoll sein, wenn das erste und das zweite Halteorgan derselben Arbeitsstation eine gemeinsame Haltebacke aufweisen. Dadurch kann die Anzahl der erforderlichen Bauteile reduziert werden.

Es kann von Nutzen sein, wenn jedes Halteorgan wenigstens ein Haltebackenpaar umfasst. Mit einem Haltebackenpaar kann jeder Artikel sicher durch Klemmung zweier entgegengesetzter Seiten gehalten und durch Klemmung zweier anderer entgegengesetzter Seiten sicher an ein anderes Halteorgan übergeben werden. Die Innenkonturen der Haltebacken sind vorzugsweise auf die Außenkonturen der zu haltenden Artikel abgestimmt.

Es kann sich als vorteilhaft erweisen, wenn jedes Halteorgan ausgebildet ist, um eine zyklische Bewegung auszuführen, die vorzugsweise in Abhängigkeit von der Position des Halteorgans entlang der Bewegungsbahn verändert wird. Dadurch kann z.B. mit einer vorgegebenen Bewegungskurve ein komplexer Bewegungsablauf jedes Halteorgans entlang der Bewegungsbahn gesteuert werden, sodass z.B. das erste Halteorgan in einer Aufnahmeposition in Aufnahmestellung überführt wird und in einer Übergabeposition in Übergabestellung überführt wird, während das zweite Halteorgan in einer Übernahmeposition in Übernahmestellung überführt wird und in einer Abgabeposition in Abgabestellung überführt wird. Zudem kann auch die Geschwindigkeit jedes Halteorgan in Abhängigkeit von der Position des Halteorgans entlang der Bewegungsbahn gesteuert werden. Dies ist insbesondere bei einem intelligenten Transportsystem möglich.

Es kann praktisch sein, wenn die Fördereinrichtung als um eine Rotationsachse drehbarer Rotationskopf ausgebildet ist, wobei die Halteorgane regelmäßig um die Rotationsachse des Rotationskopfs verteilt angeordnet sind. Ein Rotationskopf ist als Fördereinrichtung mit umlaufender Bewegungsbahn besonders geeignet, um eine hohe Stückzahl von Artikeln mit hoher Zuverlässigkeit und Präzision zu fördern und ggf. in unterschiedlichen Falt- und Einschlagarten zu verpacken. Dadurch kann auch bei hoher Prozessgeschwindigkeit ein sicherer und zeitlich aufeinander abgestimmter Bewegungsablauf der Halteorgane sichergestellt werden.

Eine als Rotationskopf ausgebildete Fördereinrichtung kann insbesondere als Packkopf oder Siegelkopf ausgebildet sein. Beispielhafte Rotationsköpfe sind aus der EP 2 906 473 oder DE 10 2018 209 185 der Anmelderin bekannt, deren Inhalte durch Bezugnahme hierin aufgenommen und enthalten sind. Mit einer als Rotationskopf ausgebildete Fördereinrichtung umfasst das Verfahren beispielsweise die folgenden Schritte:
- Schritt A: Aufnahme des Artikels mit dem ersten Halteorgan.
- Schritt B: Übergabe des Artikels vom ersten Halteorgan an das zweite Halteorgan, vorzugsweise während der Drehung des Rotationskopfs.

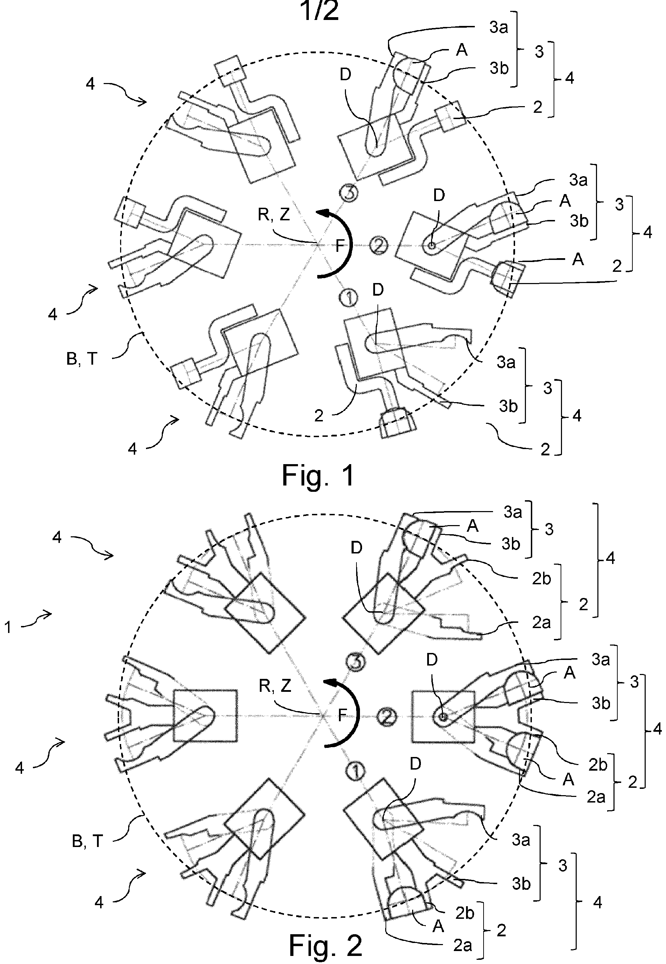

Schritt A umfasst vorzugsweise wenigstens einen der folgenden Teilschritte:
- A-1: Anordnen des Artikels in einem Aufnahmezustand, in welchem eine erste Artikelachse (Länge) tangential zu einem Kreis um die Rotationsachse des Rotationskopfs ausgerichtet ist (insbesondere Teilkreis des Rotationskopfs), eine zweite Artikelachse (Breite) achsparallel zur Rotationsachse ausgerichtet ist, und eine dritte Artikelachse (Höhe) radial zur Rotationsachse ausgerichtet ist, wobei vorzugsweise der Artikel im ersten Halteorgan über die erste Artikelachse (Länge, vgl. Fig. 2) oder über die zweite Artikelachse (Breite, vgl. Fig. 1) gehalten wird, wobei bevorzugt der Artikel im zweiten Halteorgan über die dritte Artikelachse (Höhe; vgl. Fig. 1 und 2) gehalten wird. Dabei ist der Artikel im Aufnahmezustand vorzugsweise auf dem Teilkreis des Rotationskopfs ausgerichtet. Der Artikel wird beispielsweise durch eine dem Rotationskopf vorgeschaltete Zuführeinrichtung, beispielsweise ein Entnahmerad, zugeführt.

- A-2: Anordnen des ersten Halteorgans in Aufnahmestellung, in welcher das Halteorgan zur Aufnahme des vorzugsweise im Aufnahmezustand angeordneten Artikels geeignet ist. In dieser Aufnahmestellung sind beispielsweise die Haltebacken des ersten Halteorgans geöffnet und voneinander beabstandet, sodass ein auf dem Teilkreis des Rotationskopfs angeordneter Artikel z.B. klemmend über die Länge oder Breite des Artikels aufgenommen werden kann.
- A-3: Klemmen des Artikels und/oder eines dem Artikel zugeordneten Packmittels, vorzugsweise im Aufnahmezustand. Dadurch wird das erste Halteorgan mit dem Artikel und ggf. einem dem Artikel zugeordneten Packmittel in Eingriff gebracht.
- A-4: Überführen des ersten Halteorgans in Übergabestellung, in welcher das erste Halteorgan zur Übergabe des Artikels an das zweite Halteorgan geeignet ist. Dabei bewegt sich das erste Halteorgan vorzugsweise separat von der Rotation des Rotationskopfs um die Rotationsachse in Richtung des zweiten Halteorgans.
- A-5: Lösen der Klemmung des Artikels und/oder des dem Artikel zugeordneten Packmittels, vorzugsweise in Übergabestellung. Dabei wird der Eingriff zwischen dem ersten Halteorgan und dem Artikel gelöst bzw. aufgehoben.

Schritt B umfasst vorzugsweise wenigstens einen der folgenden Teilschritte:
- B-1: Anordnen des zweiten Halteorgans in Übernahmestellung, in welcher das zweite Halteorgan zur Übernahme des Artikels von dem Halteorgan geeignet ist. Dabei sind beispielsweise die Haltebacken des zweiten Halteorgans gespreizt oder geöffnet, um den Artikel im Zwischenraum aufzunehmen. Das zweite Halteorgan ist vorzugsweise versetzt zum ersten Halteorgan angeordnet, z.B. in einer anderen senkrecht zur Rotationsachse des Rotationskopfs ausgerichteten Ebene, sodass die ersten und zweiten Halteorgane bei der Artikelübergabe den Artikel greifen können, ohne sich dabei in die Quere zu kommen. Idealerweise können die ersten und zweiten Halteorgane sich unabhängig voneinander bewegen. Bei Projektion auf eine senkrecht zur Rotationsachse ausgerichtete Ebene können sich die ersten und zweiten Halteorgane vorzugsweise zumindest abschnittsweise überlappen.
- B-2: Klemmen des Artikels und/oder eines dem Artikel zugeordneten Packmittels, vorzugsweise in Übernahmestellung des zweiten Halteorgans. Dadurch wird ein Eingriff zwischen dem zweiten Halteorgan und dem Artikel hergestellt.
- B-3: Überführen des zweiten Halteorgans in Abgabestellung, in welcher das zweite Halteorgan zur Abgabe des Artikels geeignet ist. Dadurch kann der Artikel zur Abgabe an eine nachgelagerte Einrichtung entsprechend in einer Abgabestellung positioniert werden. Beispielsweise wird der Artikel in einer Abgabestellung an die nachgelagerte Einrichtung abgegeben, in welcher die dritte Artikelachse (Höhe) tangential zum Teilkreis des Rotationskopfs ausgerichtet ist. Dadurch können z.B. quaderförmige Artikel liegend über die Artikelhöhe gestapelt werden (flaches Anstapeln).
- B-4: Lösen der Klemmung des Artikels und/oder des dem Artikel zugeordneten Packmittels, vorzugsweise in Abgabestellung. Dadurch wird der Eingriff zwischen dem zweiten Halteorgan und dem Artikel gelöst bzw. aufgehoben.
- B-6: Abgabe des Artikels an eine nachgelagerte Einrichtung. Dadurch wird der Artikel aus dem Wirkbereich des zweiten Halteorgans entfernt.

Das erste Halteorgan weist vorzugsweise wenigstens eine der folgenden Eigenschaften auf:
- Das erste Halteorgan umfasst wenigstens ein Paar von Greifern bzw. Haltebacken. Dieses Paar von Haltebacken ist beispielsweise geeignet, um den Artikel und/oder das dem Artikel zugeordnete Packmittel klemmend zu halten. Das erste Halteorgan kann auch sowohl für den Artikel und das dem Artikel zugeordnete Packmittel eigene Greifer aufweisen.
- Das erste Halteorgan ist zwischen einer Aufnahmestellung, in welcher das erste Halteorgan den Artikel (z.B. von einer externen Einrichtung bzw. Zuführeinrichtung) aufnimmt, und einer Übergabestellung, in welcher das erste Halteorgan den Artikel an das zweite Halteorgan übergibt, reversibel überführbar. Vorzugsweise wiederholt das erste Halteorgan diese Bewegung für jeden Artikel zyklisch.
- Das erste Halteorgan ist zur Überführung zwischen der Aufnahmestellung und der Übergabestellung bewegbar, vorzugsweise drehbar, bevorzugt um eine von der Rotationsachse verschiedene Drehachse, besonders bevorzugt um eine zur Rotationsachse parallele Drehachse. Durch die Bewegbarkeit des ersten Halteorgans (insbesondere gesondert von der Rotation des Rotationskopfs) kann die Änderung der Artikelorientierung vor der Übergabe an das zweite Halteorgan bereits unmittelbar nach der Artikelaufnahme eingeleitet werden.
- Das erste Halteorgan ist zur Überführung von der Aufnahmestellung in die Übergabestellung in Richtung des zweiten Halteorgans bewegbar, vorzugsweise drehbar, bevorzugt um die Drehachse, besonders bevorzugt um einen Winkel von 45°, ganz besonders bevorzugt entgegen der Drehrichtung des Rotationskopfs um die Rotationsachse. Dadurch werden die Geschwindigkeit des Artikels und die auf den Artikel einwirkenden Kräfte verringert.
- Das erste Halteorgan ist zur Überführung von der Übergabestellung in die Aufnahmestellung in einer vom zweiten Halteorgan abweisenden Richtung bewegbar, vorzugsweise drehbar, bevorzugt um die Drehachse, besonders bevorzugt um einen Winkel von 45°, ganz besonders bevorzugt in Drehrichtung des Rotationskopfs um die Rotationsachse. Dadurch wird das erste Halteorgan optimal zur Aufnahme eines neuen Artikels positioniert.
- Das erste Halteorgan ist ausgebildet, um den Artikel über eine erste Artikelachse (Länge) oder eine zweite Artikelachse (Breite) zu halten.
- Das erste Halteorgan ist in Rotationsrichtung des Rotationskopfs vor dem zweiten Haltorgan angeordnet.

Das zweite Halteorgan weist vorzugsweise wenigstens eine der folgenden Eigenschaften auf:
- Das zweite Halteorgan umfasst wenigstens ein Paar von Greifern bzw. Haltebacken. Dieses Paar von Haltebacken ist beispielsweise geeignet, um den Artikel und/oder das dem Artikel zugeordnete Packmittel klemmend zu halten. Das zweite Halteorgan kann sowohl für den Artikel, als auch das dem Artikel zugeordnete Packmittel eigene Greifer aufweisen.
- Das zweite Halteorgan ist zwischen einer Übernahmestellung, in welcher das zweite Halteorgan den Artikel von dem ersten Halteorgan übernimmt, und einer Abgabestellung, in welcher das zweite Halteorgan den Artikel abgibt, reversibel überführbar. Durch die reversible Überführung des zweiten Halteorgans zwischen der Übernahmestellung und der Abgabestellung kann nacheinander eine Vielzahl von Artikeln in einem kontinuierlichen Bewegungsablauf gefördert werden.
- Das zweite Halteorgan ist zur Überführung zwischen der Übernahmestellung und der Abgabestellung bewegbar, vorzugsweise drehbar, bevorzugt um eine von der Rotationsachse verschiedene Drehachse, besonders bevorzugt um eine zur Rotationsachse parallele Drehachse. Dadurch kann der Artikel zur Abgabe an eine nachgelagerte Einrichtung optimal positioniert werden.
- Das zweite Halteorgan ist zur Überführung von der Übernahmestellung in die Abgabestellung in einer vom ersten Halteorgan abweisenden Richtung bewegbar, vorzugsweise drehbar, bevorzugt um die Drehachse, besonders bevorzugt um einen Winkel von 45°, ganz besonders bevorzugt entgegen der Drehrichtung des Rotationskopfs um die Rotationsachse. Diese Maßnahme begünstigt die optimale Positionierung des Artikels zur Abgabe an die nachgelagerte Einrichtung.
- Das zweite Halteorgan ist zur Überführung von der Abgabestellung in die Übernahmestellung in Richtung des ersten Halteorgans bewegbar, vorzugsweise drehbar, bevorzugt um die Drehachse, besonders bevorzugt um einen Winkel von 45°, ganz besonders bevorzugt in Drehrichtung des Rotationskopfs um die Rotationsachse. Nach der Abgabe des Artikels kann das zweite Halteorgan somit optimal zur Übernahme eines neuen Artikels von der ersten Halteeinrichtung vorbereitet werden.
- Das zweite Halteorgan ist ausgebildet, um den Artikel über eine dritte Artikelachse (Höhe) zu halten. Dadurch kann die Artikelorientierung mit Übergabe des Artikels vom ersten an das zweite Halteorgan einfach geändert werden.
- Das zweite Halteorgan ist in Rotationsrichtung des Rotationskopfs hinter dem ersten Haltorgan angeordnet.

Es kann aber auch nützlich sein, wenn die Fördereinrichtung als Lineartransportsystem ausgebildet ist, wobei die Halteorgane unabhängig voneinander entlang der umlaufenden Bewegungsbahn bewegbar sind. Mit einem Lineartransportsystem können die Bewegungen der Halteorgane z.B. artikelspezifisch und unabhängig von der Position des jeweiligen Halteorgans entlang der umlaufenden Bewegungsbahn verändert werden, was eine große Flexibilität in der Förderung der Artikel ermöglich. So können die Artikelabstände entlang der umlaufenden Bewegungsbahn durch unterschiedliche Bewegungsgeschwindigkeiten der Halteorgane leicht verändert werden.

Vorteilhafte Weiterbildungen sind Gegenstände der abhängigen Ansprüche.

### Begriffe und Definitionen

Kleinstückige Artikel im Rahmen dieser Erfindung sind insbesondere Artikel von Lebensmitteln oder Verbrauchsgütern, wie Süßwaren, Brühwürfeln oder Waschtabs. Die Artikel weisen beispielsweise eine Form eines Quaders, Würfels, Ellipsoids, einer Kugel oder Pyramide, eines Zylinders, Kegels, Kegelstumpfs oder Pyramidenstumpfs auf. Auch Mischformen wie zum Beispiel Quader mit abgerundeten Ecken, die beispielsweise im Bereich der Wachstabs gebräuchlich sind, oder Pyramidenstümpfe mit kuppel- oder gewölbeförmigen Oberseiten, sind möglich. Vorzugsweise umfasst der Artikel mindestens eine ebene Fläche, idealerweise am Artikelboden. Der Umriss dieser ebenen Fläche kann beispielsweise rechteckig, quadratisch, elliptisch oder kreisrund sein. Die Abmessungen der Artikel liegen beispielsweise im Bereich von 0,5 bis 10 cm. Als Artikel im Sinne der Erfindung wird ein Artikel ohne Packmittel oder ggf. ein Artikel mit einem zugeordneten Packmittel verstanden. Es liegt somit auch im Rahmen der Erfindung, dass ein Halteorgan einen im Packmittel eingewickelten Artikel nicht direkt hält, sondern z.B. beispielsweise nur indirekt über das den Artikel umwickelnde Packmittel hält, wie z.B. in der EP 3 187 424 A1 offenbart.

Die Orientierung des Artikels wird üblicherweise über die Artikelachsen ausgedrückt. Die erste Artikelachse bezeichnet i.d.R. die Längsachse bzw. Länge des Artikels. Die Längsachse des Artikels ist vorzugsweise diejenige, die bei Aufnahme des Artikels im Rotationskopf (d.h. im Aufnahmezustand) in Förderrichtung bzw. tangential zum Teilkreis des Rotationskopfs ausgerichtet ist.

Die zweite Artikelachse bezeichnet i.d.R. die Breitenachse bzw. Breite des Artikels. Die Breitenachse des Artikels ist vorzugsweise diejenige, die bei Aufnahme des Artikels im Rotationskopf (d.h. im Aufnahmezustand) senkrecht zur Förderrichtung in einer Tangentialebene zum Teilkreis des Rotationskopfs ausgerichtet ist. Die dritte Artikelachse bezeichnet i.d.R. die Höhenachse bzw. Höhe des Artikels. Die Höhenachse des Artikels ist vorzugsweise diejenige, die bei Aufnahme des Artikels im Rotationskopf (d.h. im Aufnahmezustand) radial zur Rotationsachse des Rotationskopfs ausgerichtet ist.

Die Begriffe Artikel und Produkt werden hierin synonym verwendet. Entsprechendes gilt für die Begriffe Arbeitskopf und Rotationskopf.

### Kurze Beschreibung der Figuren

Es zeigen:
Fig. 1 eine vereinfachte, schematische Darstellung einer erfindungsgemäßen Fördereinrichtung nach dem ersten Ausführungsbeispiel der Erfindung in verschiedenen Zuständen, wobei die Fördereinrichtung als ein um seine Rotationsachse rotierender Rotationskopf ausgebildet ist und eine Mehrzahl von Arbeitsstationen mit jeweils einem ersten und einem zweiten Halteorgan aufweist, wobei in Zustand 1 das erste Halteorgan einer ersten Arbeitsstation einen Artikel über die Breite hält und sich dieses Halteorgan aus einer Aufnahmestellung entgegen der Drehrichtung des Rotationskopfs über eine zur Rotationsachse parallele Drehachse in Richtung des zweiten Halteorgans einer benachbarten Arbeitsstation des Rotationskopfs (nicht gezeigt) in eine Übergabestellung dreht, wobei in Zustand 2 das erste Halteorgan den Artikel klemmend über die Breite hält bzw. das zweite Halteorgan den Artikel klemmend über die Höhe hält, wobei in Zustand 3 das zweite Halteorgan in eine Abgabestellung gedreht ist.
Fig. 2 eine schematische Ansicht einer erfindungsgemäßen Fördereinrichtung nach dem zweiten Ausführungsbeispiel der Erfindung in verschiedenen Zuständen analog zu Fig. 1, wobei die Fördereinrichtung als ein um seine Rotationsachse rotierender Rotationskopf ausgebildet ist und eine Mehrzahl von Arbeitsstationen mit jeweils einem ersten und einem zweiten Halteorgan aufweist, wobei das erste und das zweite Halteorgan einer Arbeitsstation eine gemeinsame Haltebacke (Mittelsteg) aufweisen, wobei in Zustand 1 das erste Halteorgan einer ersten Arbeitsstation des Rotationskopfs einen Artikel über die Länge aufgenommen hat und dieses Halteorgan aus einer Aufnahmestellung über eine zur Rotationsachse parallele Drehachse entgegen der Drehrichtung des Rotationskopfs in Richtung des zweiten Halteorgans einer benachbarten Arbeitsstation des Rotationskopfs (nicht gezeigt) in eine Übergabestellung schwenkt, wobei in Zustand 2 das zweite Halteorgan der benachbarten Arbeitsstation in einer Übernahmestellung den Artikel klemmend über die Höhe aufnimmt, während das erste Halteorgan der ersten Arbeitsstation den Artikel in der Übergabestellung klemmend über die Länge zur Übergabe bereithält, wobei in Zustand 3 das zweite Halteorgan von der Übernahmestellung in Drehrichtung des Rotationskopfs in eine Abgabestellung zurückschwenkt.

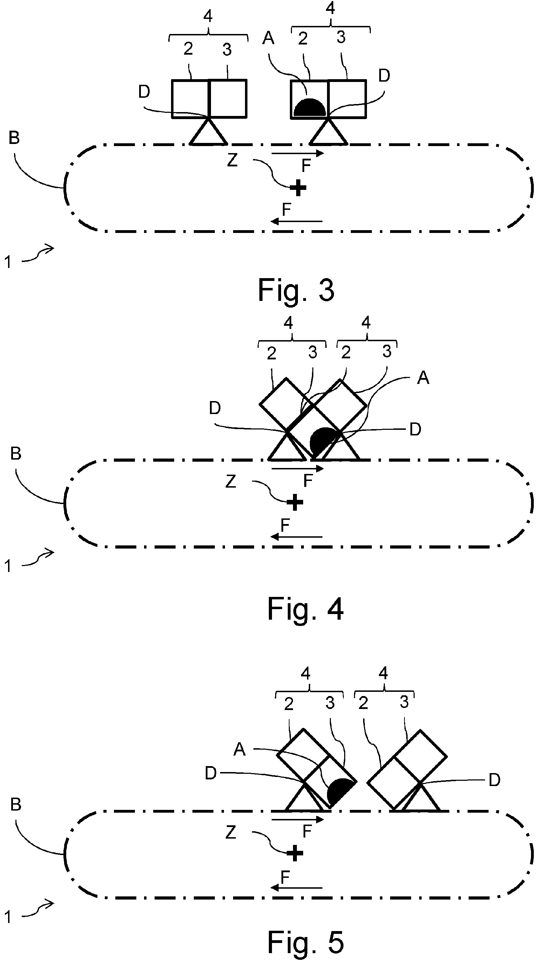

Fig. 3 eine vereinfachte, schematische Darstellung einer erfindungsgemäßen Fördereinrichtung nach dem dritten Ausführungsbeispiel der Erfindung, wobei die Fördereinrichtung als umlaufendes Lineartransportsystem ausgebildet ist, wobei wenigstens zwei Arbeitsstationen bzw. Transporteinheiten mit jeweils einem ersten und einem zweiten Halteorgan mittels Linearantrieb auf einer umlaufenden Führungsschiene bzw. Bewegungsbahn bewegbar sind, wobei das erste Halteorgan der in Bewegungsrichtung vorderen Arbeitsstation einen Artikel in einer ersten Artikelorientierung aufnimmt.
Fig. 4 die Fördereinrichtung gemäß Fig. 3 in einem Zustand, in welchem das erste Halteorgan der einen Arbeitsstation den Artikel an das zweite Halteorgan der anderen Arbeitsstation übergibt.
Fig. 5 die Fördereinrichtung gemäß Fig. 3 und 4 in einem Zustand, in welchem das zweite Halteorgan den Artikel mit einer gegenüber dem ersten Halteorgan geänderten Artikelorientierung hält.

Anmerkung: Die Figuren 1 und 2 zeigen jeweils dieselbe Arbeitsstation in verschiedenen, chronologisch aufeinander folgenden Zuständen 1, 2 und 3, wobei sich die Position dieser Arbeitsstation entsprechend der Drehung um die Rotationsachse des Rotationskopfs verändert. Die jeweils mit der dargestellten Arbeitsstation zusammenwirkende Arbeitsstation ist aus Gründen der Übersichtlichkeit nicht dargestellt. Da jede Arbeitsstation sowohl ein erstes, als auch ein zweites Halteorgan aufweist, werden die Aktivitäten der ersten und zweiten Halteorgane in den Zuständen 1, 2 und 3 in chronologischer Abfolge separat dargestellt und beschrieben. In der Realität würden sich die zusammenwirkenden ersten und zweiten Halteorgane in der dargestellten Perspektive überlappen, sodass die gewählte Darstellung (unter Ausblendung der jeweils zusammenwirkenden Arbeitsstation) aus Gründen der Übersichtlichkeit vorteilhaft erscheint.

### Detaillierte Beschreibung der bevorzugten Ausführungsbeispiele:

### Erstes Ausführungsbeispiel (Figur 1)

Im ersten Ausführungsbeispiel gemäß Figur 1 ist die erfindungsgemäße Fördereinrichtung 1 als Rotationskopf 1 ausgebildet und umfasst insgesamt n (hier: sechs) identisch ausgebildete Arbeitsstationen 4 mit jeweils einem ersten Halteorgan 2 und einem zweiten Halteorgan 3. Die Arbeitsstationen 4 sind in regelmäßigen Winkelabständen von 360°/n (hier: 60°) um die Rotationsachse R des Rotationskopfs 1 angeordnet und so konfiguriert, dass jeweils das erste Halteorgan 2 einer der Arbeitsstationen 4 mit einem zweiten Halteorgan 3 einer in Umfangs- und Bewegungsrichtung F benachbarten Arbeitsstation 4 zusammenwirkt, um einen Artikel A zu übergeben.

Im vorliegenden Fall ist der Artikel A ein näherungsweise halbkugelförmiges Schokoladenstück mit einem kreisförmigen, ebenen Boden.

In der Aufnahmestellung des Artikels A, in welcher der Artikel A im ersten Halteorgan 2 aufgenommen wird, ist der Mittelpunkt des Artikels A auf dem Teilkreis T des Rotationskopfs 1 angeordnet, wobei eine erste Artikelachse (Länge) tangential zum Teilkreis T des Rotationskopfs 1 ausgerichtet ist, eine zweite Artikelachse (Breite) achsparallel zur Rotationsachse R des Rotationskopfs 1 ausgerichtet ist, und eine dritte Artikelachse (Höhe) radial zur Rotationsachse R des Rotationskopfs 1 ausgerichtet ist. Dabei weist eine Flächennormale des kreisförmigen Bodens des Artikels A in radialer Richtung von der Rotationsachse R des Rotationskopfs 1 ab und die halbkugelförmige Oberseite des Artikels A weist zur Rotationsachse R des Rotationskopfs 1 hin. Der Teilkreis T des Rotationskopfs 1 entspricht hierbei der umlaufenden Bewegungsbahn B.

Der Rotationskopf 1 ist ausgebildet, um kontinuierlich um die Rotationsachse R zu rotieren. Die Bewegungs- bzw. Drehrichtung F (gegen den Uhrzeigersinn) ist durch den Pfeil angezeigt.

Das erste Halteorgan 2 umfasst zwei Haltebacken, die in der dargestellten Ansicht (Blickrichtung entlang der Rotationsachse R auf eine senkrecht zur Rotationsachse R ausgerichtete Ebene) im wesentlichen S-förmig ausgebildet sind und sich scherenartig symmetrisch zu einer senkrecht zur Rotationsachse R ausgerichteten Symmetrieebene bzw. Teilkreisebene öffnen und schließen. Mit den Haltebacken kann der Artikel A über die zweite Artikelachse (Breite) klemmend gehalten werden. Die Innenkonturen der Haltebacken sind vorzugsweise auf die Außenkonturen des Artikels A abgestimmt.

Das zweite Halteorgan 3 umfasst zwei Haltebacken 3a, 3b, die zum Halten des Artikels A über die dritte Artikelachse (Höhe) geeignet sind. Wie dargestellt, sind die Innenkonturen der Haltebacken 3a, 3b auf die Außenkonturen des Artikels A abgestimmt. Dabei weist insbesondere die erste Haltebacke 3a des zweiten Halteorgans 3 eine konkave Wölbung auf, die auf die konvex gewölbte, halbkugelförmige Außenkontur des Artikels A an der vom Boden abweisenden Oberseite abgestimmt ist. Die zweite Haltebacke 3b des zweiten Halteorgans 3 umfasst eine auf den kreisförmigen Boden des Artikels A abgestimmte, ebene Anlagefläche. Die beiden Haltebacken 3a, 3b des zweiten Halteorgans 3 können sich scherenartig in der Teilkreisebene öffnen und schließen.

Zustand 1 (5-Uhr-Position) zeigt eine Situation der artikelführenden Arbeitsstation 4 unmittelbar nach der Aufnahme des Artikels A durch das erste Halteorgan 2 gemäß Schritt A des Verfahrens. In diesem dargestellten Zustand ist das zweite Halteorgan 3 derselben Arbeitsstation 4 nicht belegt bzw. frei. Ausgehend von einer Aufnahmestellung, in welcher das erste Halteorgan 2 den im Aufnahmezustand angeordneten Artikels A aufnimmt, ist das erste Halteorgan 2 im Zustand 1 bereits geringfügig entgegen der Drehrichtung des Rotationskopfs 1 um eine zur Rotationsachse R parallele Drehachse D in Richtung des zweiten Halteorgans 3 der stromabwärts benachbarten Arbeitsstation 4 (nicht gezeigt) gedreht. Gleichzeitig ist das zweite Halteorgan 3 der stromabwärts benachbarten Arbeitsstation 4 (nicht gezeigt) bereits um 45° um die Drehachse D in Drehrichtung des Rotationskopfs 1, d. h. in Richtung des ersten Halteorgans 2 der stromabwärts benachbarten Arbeitsstation 4, gedreht. Durch die aufeinander abgestimmten, gegensätzlichen Drehungen der zusammenwirkenden ersten und zweiten Halteorgane 2, 3 um jeweils 45° kann die Artikelorientierung bei der Artikelübergabe vom ersten auf das zweite Halteorgan 2, 3 um 90° geändert werden.

Zustand 2 (3-Uhr-Position) zeigt eine Situation vor bzw. nach der Artikelübergabe, in welchem das artikelführende Halteorganen 2, 3 den Artikel A in der bestimmungsgemäßen Ausrichtung hält.

Zustand 3 (1-Uhr-Position) zeigt eine Situation, in welchem der Artikel A vom zweiten Halteorgan 3 über die dritte Artikelachse (Höhe) klemmend gehalten wird, wobei der Mittelpunkt des Artikels A auf dem Teilkreis T des Rotationskopfs 1 angeordnet ist und die dritte Artikelachse (Höhe) des Artikels A tangential zum Teilkreis T des Rotationskopfs 1 ausgerichtet ist.

### Zweites Ausführungsbeispiel (Figur 2)

Abweichend vom ersten Ausführungsbeispiel gemäß Figur 1 sind die ersten und zweiten Halteorgane 2, 3 der Arbeitsstationen 4 im zweiten Ausführungsbeispiel gemäß Figur 2 anders ausgebildet, während der Artikel A zum ersten Ausführungsbeispiel identisch ist. Das erste Halteorgan 2 umfasst zwei Haltebacken 2a, 2b, die sich scherenartig in bzw. parallel versetzt zu der Teilkreisebene des Rotationskopfs 1 öffnen und schließen können, um den Artikel A über die erste Artikelachse (Länge) klemmend zu halten. Die Innenkonturen dieser Haltebacken 2a, 2b sind auf die Außenkontur des Artikels A im Aufnahmezustand abgestimmt. Das zweite Halteorgan 3 umfasst ebenfalls zwei Haltebacken 3a, 3b, die sich scherenartig in bzw. parallel versetzt zu der Teilkreisebene des Rotationskopfs 1 öffnen und schließen können, um den Artikel A über die dritte Artikelachse (Höhe) klemmend zu halten. Die Innenkonturen dieser Haltebacken 2a, 2b sind auf die Außenkontur des Artikels A im Übernahmezustand abgestimmt. Die Besonderheit dieser Arbeitsstationen 4 ist, dass sich die ersten und zweiten Halteorgane 2, 3 derselben Arbeitsstation 4 eine gemeinsame Haltebacke 2b, 3b teilen. Die beiden äußeren Haltebacken 2a, 3a sind parallel versetzt zueinander in verschiedenen, senkrecht zur Rotationsachse R des Rotationskopfs 1 ausgerichteten Ebenen ausgerichtet, um sich bei der Übergabe des Artikels A vom ersten Halteorgan 2 an das zweite Halteorgan 3 nicht in die Quere zu kommen. Wie dargestellt, sind beispielsweise die beiden äußeren Haltebacken 2a, 3a der ersten und zweiten Halteorgane 2, 3 derselben Arbeitsstation 4 auf unterschiedlichen Seiten eines Grundkörpers um eine gemeinsame Drehachse D drehbar angeordnet.

Die Vorteile dieser beiden Ausführungsbeispiele mit einer als Rotationskopf ausgebildeten Förderreinrichtung lassen sich sinngemäß wie folgt zusammenfassen:
Für die Änderung der Artikelorientierung und für das Klemmen der Artikel A auf anderen Seitenflächen wurde ein Artikel A im Stand der Technik bei vielen Faltarten bislang auf einen weiteren Rotationskopf 1 übergeben.

Die beiden vorangehenden Ausführungsbeispiele beschreiben einen Rotationskopf 1, in dem diese Aufgabe innerhalb des Kopfes erledigt wird.

Grundgedanke ist, dass pro Arbeitsstation 4 zwei Haltebackenpaare 2, 3 vorhanden sind. Die Arbeitsstationen 4 sind im Rotationskopf 1 so angeordnet, dass die Übergabe des Artikels A jeweils zur benachbarten Arbeitsstation 4 möglich ist.

Im ersten Ausführungsbeispiel gemäß Fig. 1 werden die Artikel A anfangs mit dem ersten Halteorgan 2 über die zweite Artikelachse bzw. Breite gehalten. Nach der Übergabe des Artikels A an das anders angeordnete Halteorgan 3 der folgenden Arbeitsstationen 4 werden die Artikel A über die dritte Artikelachse bzw. Höhe gehalten und sie sind in ihrer Orientierung um 90° gedreht.

Im zweiten Ausführungsbeispiel gemäß Fig. 2 haben die zusammenwirkenden Halteorgane 2, 3 vor und nach der Übergabe des Artikels A die gleiche Wirkrichtung, jedoch hat sich die Lage des Artikels A verändert. Anfangs werden die Artikel A über die erste Artikelachse bzw. Länge gehalten, und nach der Übergabe über die dritte Artikelachse bzw. Höhe.

Demnach werden die Artikel A in die benachbarte Arbeitsstation 4 des gleichen Rotationskopfes 1 übergeben, wobei gleichzeitig ein Orientierungswechsel der Artikel A erfolgt. Des Weiteren ermöglicht diese Lösung, dass die Halteorgane 2, 3 verschieden angeordnet sein können.

Die funktionelle Bedeutung bei der Anwendung dieser Erfindung wird als hoch eingeschätzt. Dies gilt insbesondere für die Anwendungen, wo das intelligente Anstapeln einer Produktgruppierung aus flachliegenden Produkten erzeugt wird.

Ein weiterer Vorteil des Ausführungsbeispiels nach Fig. 2 ist, dass die Halteorgane 2, 3 vor und nach dem Richtungswechsel in der Transportebene des Artikels A liegen. Die Greifrichtung in Bezug auf den Rotationskopf 1 ändert sich also nicht zwischen Aufnahme des Artikels A von einem vorgelagerten Kopf (nicht dargestellt) und Abgabe des Artikels A an einen nachgelagerten Kopf (nicht dargestellt).

Dadurch kann ein solcher Arbeitskopf leicht gegen einen Kopf ohne Orientierungswechsel ersetzt werden, bei dem der Artikel A lediglich von der Aufnahmeposition zur Abgabeposition transportiert wird, ohne seine Orientierung zu ändern. Bsp. hierfür ist das "normale" Hochkant-Anstapeln (Stichwort: modularer Aufbau und Maschinenflexibilität).

Im Ausführungsbeispiel nach Fig. 1 ist das nicht der Fall. Dort sind die Haltelemente eines vorgelagerten Kopfes (nicht dargestellt) in einer Ebene, senkrecht zur Transportrichtung, anzuordnen. Ein einfacher Austausch durch einen Kopf, ohne Orientierungswechsel ist hier nicht möglich.

### Drittes Ausführungsbeispiel (Fig. 3 bis 5)

Das zuvor im Zusammenhang mit einem Rotationskopf 1 beschriebene Erfindungsprinzip kann auch in einem umlaufenden Lineartransportsystem verwirklicht werden.

Die als Lineartransportsystem ausgebildete Fördereinrichtung 1 nach dem dritten Ausführungsbeispiel gemäß den Figuren 3 bis 5 umfasst mehrere Arbeitsstationen 4 bzw. Transporteinrichtungen, die mittels Linearantrieb unabhängig voneinander entlang der umlaufenden Bewegungsbahn B bewegbar sind. Jede Arbeitsstation 4 umfasst ein erstes Halteorgan 2 und ein zweites Halteorgan 3. Die Halteorgane 2, 3 können beispielsweise analog zu den vorangehenden Ausführungsbeispielen als Haltebackenpaare ausgebildet sein. In der Bewegungsrichtung bzw. Förderrichtung F ist das zweite Halteorgan 3 jeder Arbeitsstation 4 vor dem ersten Halteorgan 2 derselben Arbeitsstation 4 angeordnet. Das erste und das zweite Halteorgan 2, 3 derselben Arbeitsstation 4 sind um eine gemeinsame Drehachse D, die senkrecht zur Bewegungsrichtung bzw. Förderrichtung F sowie senkrecht zur Ebene der Bewegungsbahn B ausgerichtet und vom Zentrum Z der Bewegungsbahn B beabstandet ist, drehbar.

Im Zustand gemäß Fig. 3 ist der Artikel A im ersten Halteorgan 2 einer in Förderrichtung F vorauseilenden, ersten Arbeitsstation 4 aufgenommen. Das erste Halteorgan 2 befindet sich dabei in der Aufnahmestellung.

Im Zustand gemäß Fig. 4 wird der Artikel A von dem erstem Halteorgan 2 der ersten Arbeitsstation 4 an das zweite Halteorgan 3 der in Förderrichtung F nachlaufenden, zweiten Arbeitsstation 4 übergeben. In Vorbereitung der Übergabe wurde das erste Halteorgan 2 der ersten Arbeitsstation 4 aus der in Fig. 3 gezeigten Aufnahmestellung um die Drehachse D um einen Winkel von 45° entgegen der Förderrichtung F in Richtung des zweiten Halteorgans 3 der zweiten Arbeitsstation 4 gedreht, und dabei von der Aufnahmestellung in die Übergabestellung überführt. Das zweite Halteorgan 3 der zweiten Arbeitsstation 4 wurde in Vorbereitung der Artikelübernahme aus der in Fig. 3 gezeigten Abgabestellung um die Drehachse D um einen Winkel von 45° in der Förderrichtung F in Richtung des ersten Halteorgans 2 der ersten Arbeitsstation 4 gedreht, und dabei von der Abgabestellung in die Übernahmestellung überführt. Gegenüber der in Fig. 3 gezeigten Position wurden beide Halteorgane 2, 3 in Förderrichtung F entlang der Bewegungsbahn B bewegt, das zweite Halteorgan 3 jedoch um eine größere Distanz als das erste Halteorgan 2, um zu dem ersten Halteorgan 2 aufzuschließen und dabei den Artikelabstand entlang der Bewegungsbahn B zu verringern.

Im Zustand gemäß Fig. 5 ist der Artikel A im zweiten Halteorgan 3 der zweiten Arbeitsstation 4 aufgenommen. Aus den dargestellten Übergabe- bzw. Übernahmestellungen drehen sich die Halteorgane 2, 3 um die jeweilige Drehachse D in die in Fig. 3 dargestellte Aufnahme- bzw. Abgabestellung zurück, sodass nach erfolgtem Umlauf der Halteorgane 2, 3 um die Bewegungsbahn B der zuvor beschriebene Artikelübergabezyklus mit einem weiteren Artikel A wiederholt werden kann.

### Bezugszeichenliste

- 1: Rotationskopf
- 2: Erstes Halteorgan
- 2a: Erste Haltebacke
- 2b: Zweite Haltebacke
- 3: Zweites Halteorgan
- 3a: Erste Haltebacke
- 3b: Zweite Haltebacke
- 4: Arbeitsstation
- A: Artikel
- B: Bewegungsbahn
- D: Drehachse (des Halteorgans)
- F: Förderrichtung/Bewegungsrichtung
- R: Rotationsachse (des Rotationskopfs)
- T: Teilkreis (des Rotationskopfs)
- Z: Zentrum der Bewegungsbahn

## Patentansprüche

1. Verfahren zum Fördern und ggf. Verpacken von kleinstückigen Artikeln (A), insbesondere von Lebensmitteln oder Verbrauchsgütern, wie Süßwaren, Brühwürfeln oder Waschtabs, mit einer Fördereinrichtung (1), die wenigstens zwei entlang einer umlaufenen Bewegungsbahn (B) bewegbare Halteorgane (2, 3) zum Halten und Fördern der Artikel (A) aufweist, wobei jeder Artikel (A) vorzugsweise während seiner Förderung entlang der Bewegungsbahn (B) von einem ersten dieser Halteorgane (2) an ein zweites dieser Halteorgane (3) übergeben wird.

2. Verfahren nach Anspruch 1, **dadurch gekennzeichnet, dass** das zweite Halteorgan (3) den Artikel (A) in anderer Orientierung hält als das erste Halteorgan (2), vorzugsweise über eine andere Artikelachse.

3. Verfahren nach einem der vorangehenden Ansprüche, **dadurch gekennzeichnet, dass** der Artikel (A) mit dem ersten Halteorgan (2) um eine vom Zentrum (Z) der Bewegungsbahn (B) beabstandete Drehachse (D), vorzugsweise um eine senkrecht zu einer Ebene der Bewegungsbahn (B) und/oder senkrecht zur Bewegungsrichtung (F) des ersten Halteorgans (2) ausgerichtete Drehachse (D) gedreht wird, bevorzugt in Richtung des zweiten Halteorgans (3), besonders bevorzugt um einen Winkel von 45°, ganz besonders bevorzugt entgegen der Bewegungsrichtung (F) des ersten Halteorgans (2).

4. Verfahren nach einem der vorangehenden Ansprüche, **dadurch gekennzeichnet, dass** die ersten und zweiten Halteorgane (2, 3) vor und/oder nach Übergabe des Artikels (A) relativ zueinander bewegt werden, vorzugsweise relativ zueinander gedreht werden, bevorzugt in unterschiedliche Richtungen, besonders bevorzugt in entgegengesetzte Richtungen.

5. Verfahren nach einem der vorangehenden Ansprüche, **dadurch gekennzeichnet, dass** die Artikel (A) dem ersten Halteorgan (2) auf wenigstens einer Artikelbahn nacheinander in Reihe zugeführt werden und/oder von dem zweiten Halteorgan (3) auf wenigstens einer Artikelbahn nacheinander in Reihe abgeführt werden.

6. Verfahren nach einem der vorangehenden Ansprüche, **dadurch gekennzeichnet, dass** die ersten und zweiten Halteorgane (2, 3) kontinuierlich entlang der Bewegungsbahn (B) bewegt werden, vorzugsweise in der gleichen Bewegungsrichtung (F).

7. Fördereinrichtung (1) zum Fördern und ggf. Verpacken von kleinstückigen Artikeln (A), insbesondere von Lebensmitteln oder Verbrauchsgütern, wie Süßwaren, Brühwürfeln oder Waschtabs, vorzugsweise nach dem Verfahren gemäß einem der vorangehenden Ansprüche, wobei die Fördereinrichtung (1) wenigstens zwei entlang einer umlaufenden Bewegungsbahn (B) bewegbare Halteorgane (2, 3) zum Halten und Fördern der Artikel (A) aufweist, wobei die Fördereinrichtung (1) ausgebildet ist, um jeden Artikel (A) vorzugsweise während seiner Förderung entlang der Bewegungsbahn (B) von einem ersten dieser Halteorgane (2) an ein zweites dieser Halteorgane (3) zu übergeben.

8. Fördereinrichtung (1) nach Anspruch 7, **dadurch gekennzeichnet, dass** das erste Halteorgan (2) von einer Aufnahmestellung, in welcher das erste Halteorgan (2) den Artikel (A) aufnimmt, in eine Übergabestellung, in welcher das erste Halteorgan (2) den Artikel (A) an das zweite Halteorgan (3) übergibt, reversibel überführbar ist, vorzugsweise durch Drehung um eine vom Zentrum (Z) der Bewegungsbahn (B) beabstandete Drehachse (D), bevorzugt durch Drehung um eine senkrecht zu einer Ebene der Bewegungsbahn (B) und/oder senkrecht zur Bewegungsrichtung (F) des ersten Halteorgans (2) ausgerichtete Drehachse (D), besonders bevorzugt in Richtung des zweiten Halteorgans (3), ganz besonders bevorzugt um einen Winkel von 45°, noch weiter bevorzugt entgegen der Bewegungsrichtung (F) des ersten Halteorgans (2).

9. Fördereinrichtung (1) nach einem der Ansprüche 7 oder 8, **dadurch gekennzeichnet, dass** das zweite Halteorgan (3) von einer Übernahmestellung, in welcher das zweite Halteorgan (3) den Artikel (A) vom erstem Halteorgan (2) übernimmt, in eine Abgabestellung, in welcher das zweite Halteorgan (3) den Artikel (A) abgibt, reversibel überführbar ist, vorzugsweise durch Drehung um eine vom Zentrum der Bewegungsbahn (B) beabstandete Drehachse (D), bevorzugt durch Drehung um eine senkrecht zu einer Ebene der Bewegungsbahn (B) und/oder senkrecht zur Bewegungsrichtung (F) des ersten Halteorgans (2) ausgerichtete Drehachse (D), besonders bevorzugt in einer vom ersten Halteorgan (2) abweisenden Richtung, ganz besonders bevorzugt um einen Winkel von 45°, noch weiter bevorzugt entgegen der Bewegungsrichtung (R) des zweiten Halteorgans (3).

10. Fördereinrichtung (1) nach einem der Ansprüche 7 bis 9, **dadurch gekennzeichnet, dass** die Fördereinrichtung (1) eine Mehrzahl von Arbeitsstationen (4) mit jeweils einem ersten Halteorgan (2) und einem zweiten Halteorgan (3) aufweist, wobei vorzugsweise die Arbeitsstationen (4) derart konfiguriert sind, dass ein Artikel (A) jeweils von einem ersten Halteorgan (2) einer der Arbeitsstationen (4) an ein zweites Halteorgan (3) einer anderen der Arbeitsstationen (4) übergeben wird, wobei bevorzugt das erste und das zweite Halteorgan (2, 3) derselben Arbeitsstation (4) um eine gemeinsame Drehachse (D) drehbar sind.

11. Fördereinrichtung (1) nach Anspruch 10, **dadurch gekennzeichnet, dass** das erste und das zweite Halteorgan (2, 3) derselben Arbeitsstation (4) eine gemeinsame Haltebacke (2b, 3b) aufweisen.

12. Fördereinrichtung (1) nach einem der Ansprüche 7 bis 11, **dadurch gekennzeichnet, dass** jedes Halteorgan (2, 3) wenigstens ein Haltebackenpaar (2a, 3b; 3a, 3b) umfasst.

13. Fördereinrichtung (1) nach einem der Ansprüche 7 bis 12, **dadurch gekennzeichnet, dass** jedes Halteorgan (2, 3) ausgebildet ist, um eine zyklische Bewegung auszuführen, die vorzugsweise in Abhängigkeit von der Position des Halteorgans (2, 3) entlang der Bewegungsbahn (B) gesteuert wird.

14. Fördereinrichtung (1) nach einem der Ansprüche 7 bis 13, **dadurch gekennzeichnet, dass** die Fördereinrichtung (1) als um eine Rotationsachse (R) drehbarer Rotationskopf (1) ausgebildet ist, wobei die Halteorgane (2, 3) vorzugsweise regelmäßig um die Rotationsachse (R) des Rotationskopfs (1) verteilt angeordnet sind.

15. Fördereinrichtung (1) nach einem der Ansprüche 7 bis 13, **dadurch gekennzeichnet, dass** die Fördereinrichtung (1) als Lineartransportsystem ausgebildet ist, wobei die Halteorgane (2, 3) vorzugsweise unabhängig voneinander entlang der umlaufenden Bewegungsbahn (B) bewegbar sind.
